**Europäisches Patentamt**

**European Patent Office**

**Office européen des brevets**

(19)

(11) Numéro de publication : **0 228 944 B1**

(12) **FASCICULE DE BREVET EUROPEEN**

(45) Date de publication du fascicule du brevet :
**16.01.91 Bulletin 91/03**

(51) Int. Cl.$^5$ : **A01F 15/00**

(21) Numéro de dépôt : **86402721.4**

(22) Date de dépôt : **09.12.86**

(54) **Dispositif de confection de balles cylindriques d'un produit agricole dans une presse ramasseuse.**

(30) Priorité : **20.12.85 FR 8518945**

(43) Date de publication de la demande :
**15.07.87 Bulletin 87/29**

(45) Mention de la délivrance du brevet :
**16.01.91 Bulletin 91/03**

(84) Etats contractants désignés :
**DE GB NL**

(56) Documents cités :
**EP-A- 0 037 155**
**EP-A- 0 149 368**
**FR-A- 2 448 282**
**FR-A- 2 541 074**

(73) Titulaire : **RIVIERRE CASALIS**
**8, rue André Dessaux**
**F-45400 Fleury Les Aubrais (FR)**

(72) Inventeur : **Mouret, Patrick**
**328, rue de la Garenne**
**F-45660 Mardie (FR)**

(74) Mandataire : **Hirsch, Marc-Roger**
**Cabinet Hirsch 34 rue de Bassano**
**F-75008 Paris (FR)**

## Description

L'invention a pour objet une presse pour la confection de balles cylindriques d'un produit agricole comprenant :

— un bâti muni de roues pour rouler sur le sol

— une partie arrière relevable

— un ramasseur

— des moyens presseurs montés à pivotement autour d'axes respectifs qui sont portés l'un par le bâti et l'autre par la partie arrière relevable et constituant chacun l'axe de rotation d'un rouleau inférieur

— un jeu de courroies entraîné par un rouleau dont l'axe constitue l'axe de pivotement de la partie relevable. On connaît de FR-A-2 549 688 une presse ramasseuse dans laquelle le produit agricole à presser est ramassé sur le sol puis est guidé en continu au travers d'une ouverture d'admission dans une chambre de pressage. Dans cette chambre le produit est enroulé et pressé en spirale par des convoyeurs à courroies.

On connaît également de FR-A-2 284 276 une presse ramasseuse dans laquelle le produit agricole à presser est entassé puis pressé dans une chambre de forme cylindrique portant sur son pourtour des organes transporteurs constitués par des bandes transporteuses ou des cylindres à réglettes ou à griffes. Lorsque la balle atteint le diamètre désiré, elle peut être liée avant son éjection de la presse.

Les presses utilisant le procédé de confection de la balle par enroulement en spirale nécessitent la mise en oeuvre de forces motrices destinées à l'entraînement de la balle et de l'ensemble des convoyeurs. Il en résulte une perte d'énergie due au fait que l'ensemble des convoyeurs n'est pas progressivement chargé par la balle en formation. Par ailleurs, l'obtention d'une bonne densité du produit agricole en fin de formation de la balle, nécessite l'emploi d'un système de tension des courroies relativement complexe.

Les presses utilisant une chambre cylindrique limitée par des bandes transporteuses ou des cylindres, n'autorisent pas l'enroulement du produit récolté au début du remplissage de la chambre.

L'invention porte sur une presse de confection de balles cylindriques permettant d'assurer un enroulement en spirale du produit récolté et un pressage continu de celui-ci afin d'obtenir une densité élevée dans les spires extérieures de la balle. Elle porte encore sur une telle presse ne comportant qu'un nombre minimum d'organes transporteurs tels que bandes transporteuses ou cylindres.

L'invention a pour objet une presse du type précité dans laquelle les moyens presseurs comportent deux trains de rouleaux délimitant entre eux et en coopération avec le jeu de courroies et un rouleau d'alimentation une chambre d'enroulement, les rouleaux les plus élevés de ce train de rouleaux étant en appui sur le jeu de courroies mises en tension par des moyens tendeurs sollicités par des ressorts. La presse permet le ramassage d'andains de toute épaisseur et le chargement rapide de ceux-ci dans la presse.

Selon une autre caractéristique de la presse, le déplacement de l'un des moyens presseurs au cours du relevage de la partie arrière de la presse permet le déplacement de l'autre moyen presseur vers sa position de repos sous l'action d'un moyen de rappel générateur d'un effort de poussée appliqué à la balle qui est orienté vers l'arrière de la presse.

Avec une telle presse on obtient dans un temps relativement court la confection et l'éjection d'une balle qui présente une bonne densité intérieure, ce qui est principalement dû au fait que le volume de la chambre d'enroulement est variable au cours de l'accroissement du diamètre de la balle ainsi que cela se produit dans les presses conventionnelles à courroies d'entraînement qui appliquent simultanément un effort de compression et de rotation à la balle en formation.

La même presse permet donc d'obtenir une balle comprimée du fait que l'effort de compression s'exerce sur la balle tout au long du processus l'élaboration. La presse offre également l'avantage d'obtenir des balles dont la densité est considérablement augmentée par rapport au procédé antérieurement appliqué suivant lequel la chambre d'enroulement, sensiblement cylindrique, est limitée à sa périphérie par des éléments rotatifs fixes en position et entrainés simultanément dans le but de faire tourner de manière continue le produit agricole dans la totalité de la chambre d'enroulement.

D'autres caractéristiques de la presse sont décrits ci-après à l'aide d'un exemple de réalisation en référence au dessin dans lequel :

— la figure 1 est une représentation schématique d'une vue latérale des éléments fonctionnels de la presse ;

— les figures 2 à 5 sont des vues latérales des éléments fonctionnels de la presse montrant la formation progressive d'une balle cylindrique jusqu'au déversement hors de la presse.

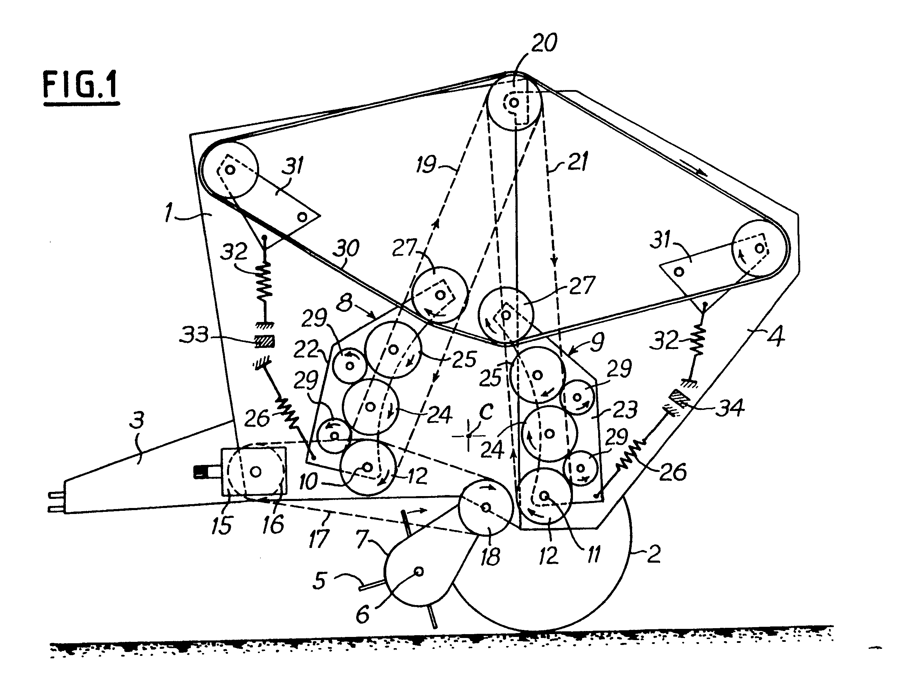

La presse à fourrage représentée à la figure 1, qui produit des balles de fourrage roulées A, comporte un bâti ou châssis 1, reposant sur le sol par l'intermédiaire de roues 2 et qui est muni à l'avant d'un timon 3 pour l'attelage à un tracteur et d'une partie arrière relevable 4. Le fourrage formant sur le sol des andains B, est saisi au moyen de dents 5 portées par l'arbre rotatif 6 d'un ramasseur 7 qui fait passer le fourrage entre deux moyens presseurs 8, 9 montés à pivotement autour d'axes respectifs 10, 11 porté par le bâti 1 et par la partie relevable 4. Chacun des axes 10, 11 constituent l'axe de rotation d'un rouleau 12 entrainé en rotation par l'intermédiaire d'une transmission à chaine. A cet effet, les axes des différents rouleaux moteurs portent des pignons d'entraînement dont les dents sont en engagement avec les chaînes de transmission.

Les rouleaux d'entraînement 12 délimitent avec un rouleau d'alimentation 18, l'entrée de la chambre d'enroulement C. La prise de force du tracteur entraîne un boîtier de renvoi 15 dont l'arbre de sortie porte un pignon moteur 16 dont le mouvement de rotation est transmis par une chaine de transmission 17 au rouleau d'alimentation 18, au ramasseur 7 et à l'un des rouleaux 12. Ce rouleau 12 est ainsi entrainé par la chaine 17 et son mouvement est transmis par l'intermédiaire d'une chaine 19 à un rouleau 20 dont le pignon assure le renvoi du mouvement de rotation à une chaine 21 d'entraînement de l'autre rouleau 12. Dans un but de simplification constructive, l'axe du rouleau 20 constitue l'axe de pivotement de la partie arrière relevable 4.

Les moyens presseurs 8, 9 sont constitués par des bras 22, 23 montés à pivotement par rapport aux axes des rouleaux 12 et portent eux-mêmes des rouleaux 24, 25 entrainés par des rouleaux de friction 29 à partir desdits rouleaux 12. Un ressort de freinage 26 monté en tension entre chaque bras 22 ou 23 et respectivement le bâti 1 ou la partie relevable 4 assure le freinage des bras 22, 23 au cours de l'éloignement des rouleaux 24, 25 respectifs des bras 22, 23 au cours de la formation de la balle.

Les bras 22, 23 portent également des rouleaux d'extrémité 27 plus éloignés des axes 10, 11. Les rouleaux 27 sont en appui sur un jeu de courroies 30 mises en rotation par le rouleau 20. Des moyens tendeurs 31 sollicités par des ressorts 32 sont montés respectivement sur le bâti 1 et sur la partie relevable 4 dans le but d'assurer une tension des courroies 30 quelle que soit la charge contenue dans la chambre de confection de la balle.

Des organes de butée 33, 34 respectivement solidaires du bâti 1 et de la partie relevable 4 limitent les déplacements angulaires des bras 22, 23.

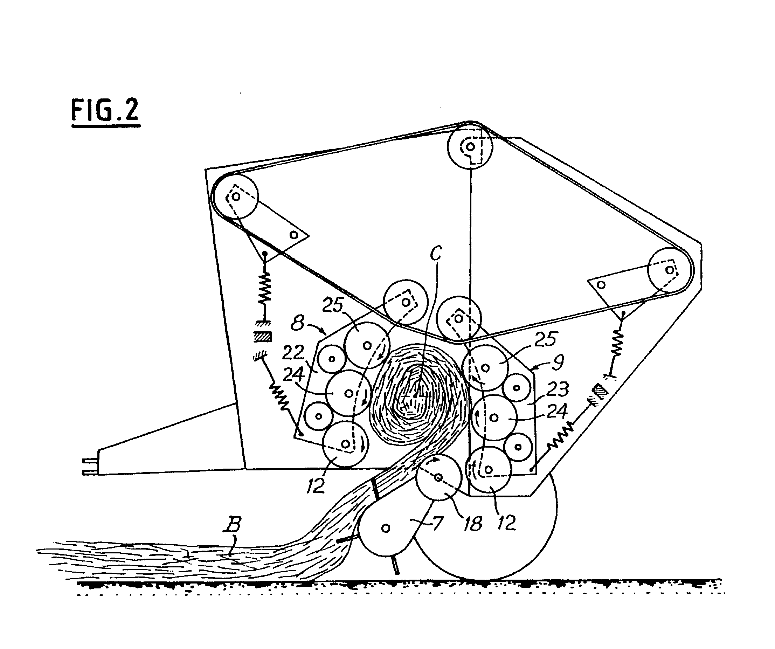

Selon la figure 2, l'andain B est soulevé par le ramasseur 7 puis est introduit dans la chambre d'enroulement C formée entre les bras 22, 23 pour une position déterminée des moyens presseurs 8, 9. La rotation de la balle en formation est assurée par l'ensemble des rouleaux 18, 12, 24, 25 tant que le diamètre de la balle reste inférieur à une première valeur D1.

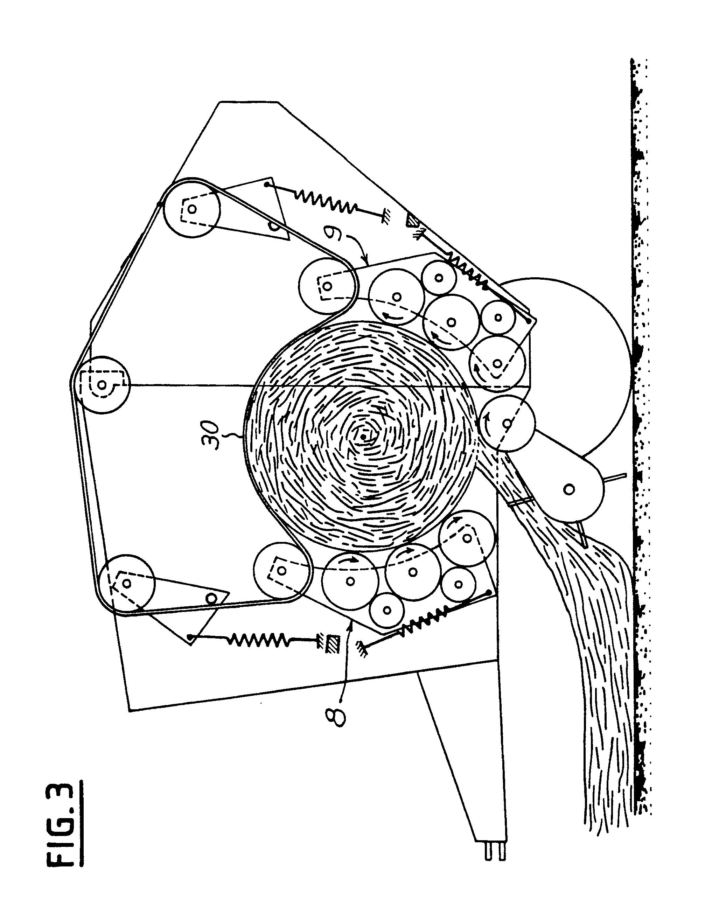

Ainsi que le montre la figure 3, lorsque le diamètre de la balle atteint le diamètre D1 correspondant sensiblement à la distance existante entre les courroies 30 et l'entrée de la chambre d'enroulement C, les courroies 30 assurent le maintien de la balle et assurent sa compression conjointement avec les moyens presseurs 8, 9.

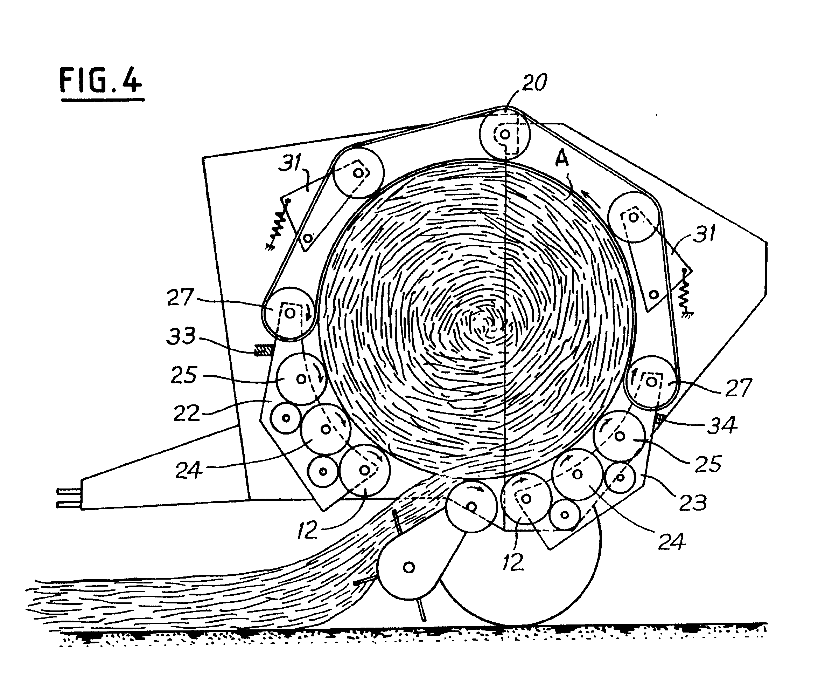

La figure 4 montre la balle A qui atteint son diamètre d'achèvement D2. Les moyens presseurs 8, 9 sont en appui par leurs bras 22, 23 sur les butées fin de course 33, 34 solidaires du bâti 1 et de la partie relevable 4.

La cinématique et la position de l'ensemble des rouleaux 24, 25, 20, 12 et 27 permettent à la balle d'être en contact avec ceux-ci tout au long de son périmètre dans le but d'obtenir une densité augmentée du produit constitutif de la balle en fin de processus de formation.

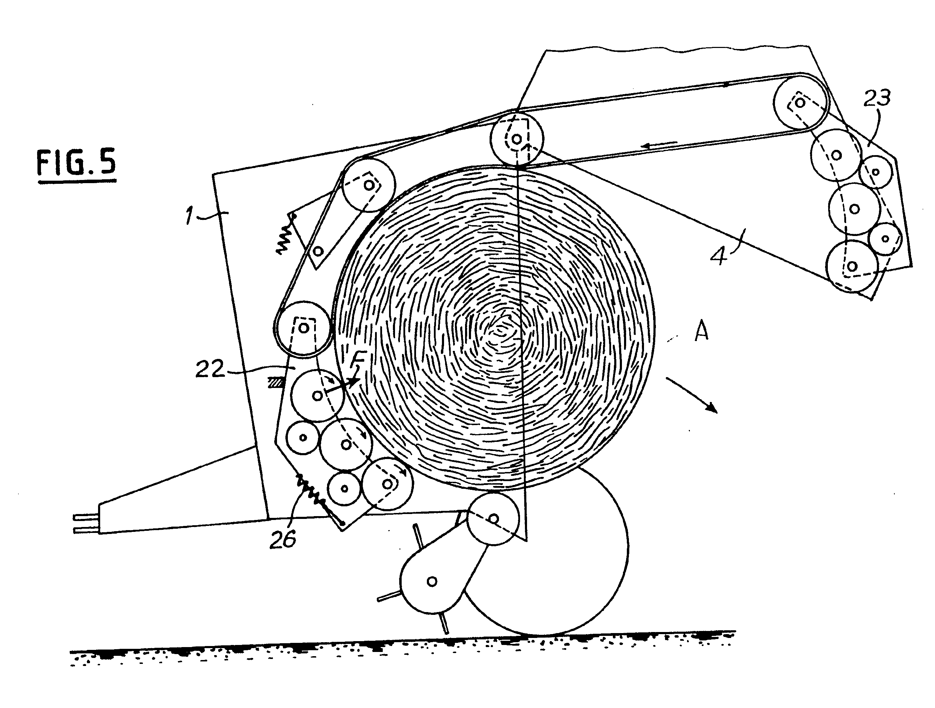

La figure 5 montre la balle B achevée, liée ou emballée par tout moyen connu qui ne fait pas partie de la présente invention.

A titre d'exemple, on pourra utiliser le dispositif décrit dans la demande de brevet français FR-A-2 576 479 (8501032) et dans EP-B-192904 déposées au nom de la demanderesse et intitulées "Presse à fourrage pour la production de balles roulées avec mécanisme de liage".

Au cours du relevage de la partie arrière 4 de la presse, le moyen presseur est rappelé vers sa position de repos sous l'action du ressort de rappel 26. Il en résulte un effort de poussée F orienté vers l'arrière de la presse qui pousse la balle hors de la presse.

## Revendications

1. Presse pour la confection de balles cylindriques

d'un produit agricole comprenant :
– un bâti (1) muni de roues (2) pour rouler sur le sol ;
– une partie arrière relevable (4) ;
– un ramasseur (7) ;
– des moyens presseurs (8, 9) montés à pivotement autour d'axes respectifs (10, 11) qui sont portés l'un (10) par le bâti (1) et l'autre (11) par la partie arrière relevable (4) et constituant chacun l'axe de rotation d'un rouleau inférieur (12) ;
– un jeu de courroies (30) entraîné par un rouleau (20) dont l'axe constitue l'axe de pivotement de la partie relevable (4),
caractérisée en ce que les moyens presseurs (8, 9) comportent deux trains de rouleaux (12, 24, 25, 27) délimitant entre eux et en coopération avec le jeu de courroies (30) et un rouleau d'alimentation (18) une chambre d'enroulement (C) et en ce que les rouleaux les plus élevés (27) de ce train de rouleaux sont en appui sur le jeu de courroies (30) mises en tension par des moyens tendeurs (31) sollicités par des ressorts (32).

## Ansprüche

1. Presse für die Bildung von Rundballen von einem

landwirtschaftlichen Produkt welche :

– ein Gestell (1) mit Rädern (2) zum Fahren auf dem Boden ;

– einen heraufklappbaren hinteren Teil (4) ;

– einen Aufsammler (7) ;

– Mittel zum Pressen (8, 9) die schwenkend um entsprechende Achsen (10, 11) montiert sind, wovon eine (10) von dem Gestell (1) und die andere (11) von dem heraufklappbaren hinteren Teil (4) getragen werden und wobei jede die Drehachse einer unteren Walze (12) bildet ;

– einen Satz Riemen (30) die von einer Walze (20) angetrieben werden deren Achse die Drehachse des heraufklappbaren Teils (4) bildet, aufweist, dadurch gekennzeichnet, dass die Mittel zum Pressen (8, 9) zwei Rollgänge (12, 24, 25, 27) aufweisen die untereinander und in Zusammenarbeit mit dem Satz Riemen (30) und einer Zuführwalze (18) eine Wicklungskammer (C) abgrenzen und dadurch, dass die am höchsten liegenden Walzen (27) dieses Rollgangs auf den Satz Riemen (30) gestützt sind, welche durch Spannmittel (31) die von Federn (32) angezogen werden, unter Spannung gesetzt werden.

## Claims

1. A cylindrical bale baler for an agricultural product comprising :

– a frame (1) having ground wheels (2) ;

– a raisable rear part (4) ;

– a pick-up device (7)

– baling means (8, 9) pivotally mounted on fixed pivot means (10, 11) disposed one (10) on said frame and the other (11) on said raisable rear part (4) and each constituting the axis of rotation of a lower roller (12) ;

– a set of belts (30) driven by a roller (20) the axis of which constitutes the axis about which said raisable rear part (4) rotates, characterized in that the baling means (8, 9) are formed by two sets of rollers (12, 24, 25, 27) defining therebetween and in cooperation with the set of belts (30) and a feed roller (18), a rolling chamber (C) the axis of the lower rollers (12) of said chamber being the pivoting axis (10, 11) of said baling means (8, 9) and in that the uppermost rollers (27) of the set of rollers bear on the set of belts (30) tensioned by tensioning means (31) biased by spring means (32).

EP 0 228 944 B1

# FIG.1

FIG.2

FIG.3

EP 0 228 944 B1

FIG.4

FIG.5